# EUROPÄISCHE PATENTSCHRIFT

(11) **EP 3 088 757 B1**
(45) Veröffentlichungstag und Bekanntmachung des Hinweises auf die Patenterteilung: **29.05.2019**
(21) Anmeldenummer: 15001280.5
(22) Anmeldetag: 30.04.2015
(51) Int. Cl.: F16D 3/68

(54) **KLAUENKUPPLUNG**
CLAW COUPLING
EMBRAYAGE À GRIFFES

(43) Veröffentlichungstag der Anmeldung: 02.11.2016
(73) Patentinhaber: Flender GmbH, 46395 Bocholt (DE)
(72) Erfinder: Kleinewegen, Stefan, 46395 Bocholt (DE)
(74) Vertreter: Maier, Daniel Oliver

(56) Entgegenhaltungen:
- EP-A1- 2 500 594
- JP-A- S58 211 022
- US-A- 6 123 620

## Beschreibung

Die vorliegende Erfindung betrifft eine Klauenkupplung umfassend zwei einander gegenüber und bezogen auf eine Längsachse fluchtend angeordnete Kupplungselemente mit einander zugewandten Stirnflächen, von denen jeweils wechselweise ineinander greifende Klauen vorstehen, die jeweils auf Kreisringen angeordnet sind, und einen zwischen den beiden Kupplungselementen angeordneten, aus elastischem Material hergestellten Druckkörperring, der ein Ringelement sowie radial auswärts von dem Ringelement vorstehende Druckkörper aufweist, von denen jeder zwischen zwei benachbart angeordneten Klauen der jeweiligen Kupplungselemente aufgenommen ist, wobei zumindest einige der Druckkörper mit wenigstens einem axial vorstehenden Abstandshalter versehen sind, und wobei jeder Abstandshalter eine Anlagefläche aufweist, die, wenn über die Klauenkupplung ein vorbestimmtes Drehmoment übertragen wird, gegen einen Kontaktflächenbereich einer Stirnfläche eines Kupplungselements gedrückt wird.

Klauenkupplungen der eingangs genannten Art sind im Stand der Technik in unterschiedlichsten Ausgestaltungen bekannt. Sie dienen dazu, ein Drehmoment zwischen zwei miteinander fluchtenden Wellen zu übertragen, wie beispielsweise zwischen einer Motorwelle und einer Getriebewelle. Während des Betriebs verdrehen sich die beiden Kupplungselemente relativ zueinander entsprechend dem anliegenden Drehmoment und der Steifigkeit des elastischen Materials des Druckkörperringes. Dabei vollzieht auch jede Klaue der Kupplungselemente eine Drehbewegung, wobei sich ein radial weiter außen angeordneter Punkt einer Seitenfläche einer Klaue auf einer größeren Kreisbahn als ein weiter innen liegender Punkt auf der Seitenfläche der Klaue bewegt und damit einen größeren Weg zurücklegt. Dies führt dazu, dass jeder Druckkörper des Druckkörperringes außen mehr zusammengepresst wird als innen, was eine ungleichförmige Pressungsverteilung nach sich zieht, bei der radial außen eine höhere Kantenpressung wirkt. Entsprechend werden die Druckkörper während des Betriebs der Klauenkupplung radial einwärts gedrückt, was häufig eine erhebliche und unerwünschte Verformung des Ringelementes des Druckkörperringes nach sich zieht. Um derartige Verformungen des Ringelementes zu verhindern, ist es bereits bekannt, das maximal zulässige Drehmoment einer Klauenkupplung zu begrenzen. Auf diese Weise kann verhindert werden, dass unzulässig hohe radial einwärts gerichtete Kräfte auf die Druckkörper wirken, wodurch einer Verformung des Ringelementes des Druckkörperringes effektiv entgegen gewirkt werden kann. Das maximal zulässige Drehmoment ist hier allerdings meist sehr niedrig anzusetzen. Ein weiterer Ansatz besteht darin, das Ringelement des Druckkörperringes durch eine Kreisscheibe zu ersetzen, um der Anordnung eine höhere Steifigkeit in radialer Richtung zu verleihen. Bei einer solchen Ausgestaltung kann dann eine Welle jedoch nicht mehr in die Klauenkupplung ragen, was eine konstruktive Einschränkung bedeutet.

Weitere Klauenkupplungen sind in den Druckschriften US 6,123,620 A, EP 2 500 594 A1 und JP 958 211 022 A offenbart.

Ausgehend von diesem Stand der Technik ist es eine Aufgabe der vorliegenden Erfindung, eine Klauenkupplung der eingangs genannten Art mit alternativem Aufbau zu schaffen.

Zur Lösung dieser Aufgabe schafft die vorliegende Erfindung eine Klauenkupplung der eingangs genannten Art, die dadurch gekennzeichnet ist, dass die Kontaktflächenbereiche derart geneigt oder gewölbt ausgebildet sind, dass im unbelasteten Zustand der Klauenkupplung ein axialer Abstand zwischen den Anlageflächen der Abstandshalter und den zugeordneten Kontaktflächenbereichen der Stirnflächen in radialer Auswärtsrichtung zunimmt. Während einer Drehmomentübertragung von einem Kupplungselement zum anderen Kupplungselement werden die Druckkörper des Druckkörperringes derart verformt, dass sich die Stirnflächen der jeweiligen Druckkörper mit den an diesen angeordneten Abstandshaltern ausbauchen, bis die Anlageflächen der Abstandshalter bei Überschreitung eines vorbestimmten Drehmomentes mit den Kontaktflächenbereichen der Stirnflächen der Kupplungselemente in Eingriff kommen, wodurch wie bei herkömmlichen Abstandshaltern zunächst eine axiale Fixierung der Druckkörper erzielt wird. Bei weiterer Erhöhung des Drehmomentes werden die Anlageflächen dann gegen die Kontaktflächenbereiche gedrückt, was eine Verformung der Abstandshalter zur Folge hat. Dank der geneigten oder gewölbten Ausbildung der Kontaktflächenbereiche der Stirnflächen der Kupplungselemente werden die sich verformenden Abstandshalter zusammen mit den Druckkörpern, von denen sie vorstehen, an einer radialen Einwärtsbewegung gehindert, wodurch das Ringelement des Druckkörperringes entlastet wird. Auf diese Weise wird einer Verformung des Ringelementes des Druckkörperringes in radialer Einwärtsrichtung effektiv entgegen gewirkt.

Gemäß einer Ausgestaltung der vorliegenden Erfindung weist jedes Kupplungselement vier Klauen und der Druckkörperring acht Druckkörper auf. Diese Ausgestaltung hat sich hinsichtlich einer Drehmomentübertragung als sehr vorteilhaft erwiesen.

Bevorzugt ist jeder Druckkörper mit zumindest einem Abstandshalter versehen. Dies ist dahingehend von Vorteil, dass auftretende Kräfte gleichmäßig über den Druckkörperring verteilt werden.

Gemäß einer Ausgestaltung der vorliegenden Erfindung stehen Abstandshalter benachbarter Druckkörper axial in entgegengesetzten Richtungen vor. Auch diese Ausgestaltung ist einer gleichmäßigen Kraftverteilung zuträglich.

Vorteilhaft ist jeder Druckkörper mit zumindest zwei Abstandshaltern versehen, die in entgegengesetzten Richtungen vorstehen.

Gemäß einer Ausgestaltung der vorliegenden Erfindung sind die Anlageflächen der Abstandshalter geneigt oder gewölbt ausgebildet, insbesondere korrespondierend zu den Kontaktflächenbereichen der Stirnflächen der Kupplungselemente.

Bevorzugt sind die Anlageflächen der Abstandshalter in radialer Richtung länglich, insbesondere oval ausgebildet, wodurch während des Betriebs der Klauenkupplung vergleichsweise große, radial auswärts gerichtete Kräfte erzeugt werden.

Weitere Merkmale und Vorteile der vorliegenden Erfindung werden anhand der nachfolgenden Beschreibung einer Klauenkupplung gemäß einer Ausführungsform der vorliegenden Erfindung unter Bezugnahme auf die beiliegende Zeichnung deutlich. Darin ist
- Figur 1: eine perspektivische Ansicht einer Klauenkupplung gemäß einer Ausführungsform der vorliegenden Erfindung in teilweise montiertem Zustand;
- Figur 2: eine geschnittene Seitenansicht des in Figur 1 gezeigten Kupplungselementes entlang der Linie II in Figur 1, wobei sich die dargestellte Anordnung in einem unbelasteten Zustand befindet;
- Figur 3: eine geschnittene Seitenansicht anlag zu Figur 2, wobei sich die Anordnung in einem Zustand befindet, in dem ein vorbestimmtes Drehmoment übertragen wird; und
- Figur 4: eine geschnittene Seitenansicht analog zu Figur 2, wobei sich die Anordnung in einem Zustand befindet, in dem ein Nenn-Drehmoment der Klauenkupplung übertragen wird.

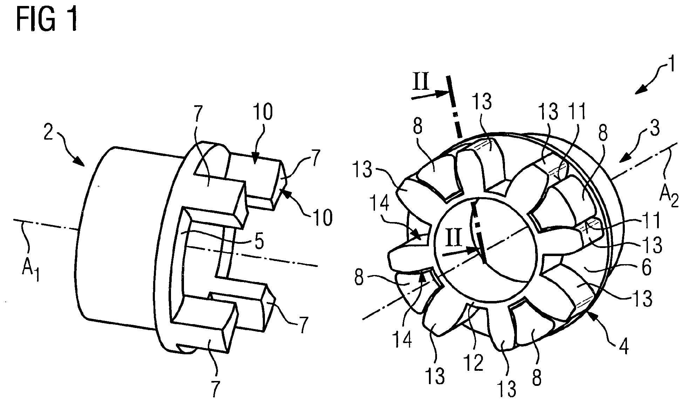

Die Figuren 1 bis 4 zeigen eine Klauenkupplung 1 gemäß eine Ausführungsform der vorliegenden Erfindung bzw. Komponenten derselben. Die Klauenkupplung 1 dient dazu, ein Drehmoment zwischen zwei miteinander fluchtenden Wellen zu übertragen und umfasst als Hauptkomponenten zwei im bestimmungsgemäß montierten Zustand axial einander gegenüber angeordnete Kupplungselemente 2, 3 mit fluchtenden Längsachsen A1, A2 sowie einen zwischen diesen angeordneten Druckkörperring 4.

Die beiden Kupplungselemente 2 und 3 weisen einander zugewandte und gewölbt ausgebildete Stirnflächen 5 und 6 auf, von denen wechselweise ineinander greifende Klauen 7 und 8 vorstehen, die jeweils auf einander entsprechenden Kreisringen angeordnet sind, wobei jedes Kupplungselement 2, 3 vorliegend vier Klauen 7, 8 aufweist. Dabei definieren jeweils benachbart angeordnete Klauen 7 und 8 der Kupplungselemente 2 und 3 zwischen sich einen sich axial erstreckenden Aufnahmeraum 9, der von einander zugewandten konkav gewölbten Seitenflächen 10 und 11 der Klauen 7 und 8 der Kupplungselemente 2 und 3 in Umfangsrichtung begrenzt ist. Die Kupplungselemente 2 und 3 sind vorliegend identisch ausgebildet. Alternativ ist es natürlich auch möglich, die Kupplungselemente 2 und 3 sowie deren Klauen 7 und 8 verschieden auszubilden, wenn dies zweckdienlich ist.

Der Druckkörperring 4 ist aus elastischem Material hergestellt und umfasst ein Ringelement 12 sowie acht radial auswärts von dem Ringelement 12 vorstehende Druckkörper 13, wobei das Ringelement 12 und die Druckkörper 13 vorliegend einteilig ausgebildet sind. Die Druckkörper 13 umfassen Flächen 14, die konvex gewölbt sind, wobei die Wölbungen im Wesentlichen denjenigen der Klauen 7 und 8 folgen. Jeder Druckkörper 13 ist an einer seiner gegenüberliegenden Stirnseiten 15 mit einem axial vorstehenden Abstandshalter 16 versehen, der eine in radialer Richtung länglich oval ausgebildete ebene Anlagefläche 17 definiert, wobei die Abstandshalter 16 benachbarter Druckkörper 13 jeweils axial in entgegengesetzten Richtungen vorstehen.

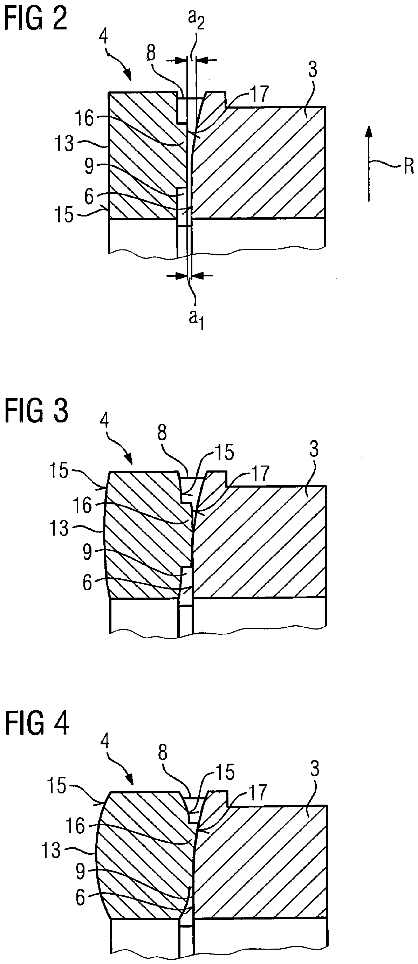

Im montierten Zustand der Klauenkupplung 1 ist der Druckkörperring 4 zwischen den beiden Kupplungselementen 2 und 3 derart eingesetzt, dass die einzelnen Druckkörper 13 des Drucckörperringes 4 in den jeweiligen Aufnahmeräumen 9 aufgenommen sind, die jeweils zwischen den einander zugewandten Seitenflächen 10 und 11 der Klauen 7 und 8 definiert sind. Im unbelasteten Zustand der Klauenkupplung 1, der in den Figur 2 dargestellt ist, sind die von den Druckkörpern 13 vorstehenden Abstandshalter 16 von den Stirnflächen 5 und 6 der Kupplungselemente 2 und 3 leicht beabstandet. Die Wölbung der Stirnflächen 5 und 6 der Kupplungselemente 2 und 3 ist derart gewählt, dass im unbelasteten Zustand der Klauenkupplung 1 ein axialer Abstand a zwischen den Anlagenflächen 17 der Abstandhalter 16 und den Stirnflächen 5, 6 bzw. deren Kontaktflächenbereichen in einer radialen Auswärtsrichtung R zunimmt, wie es in Figur 2 durch die eingezeichneten Abstände a1 und a2 angedeutet ist.

Wird von der Klauenkupplung 1 nunmehr ein Drehmoment übertragen, so werden die zwischen den Klauen 7 und 8 der Kupplungselemente 2 und 3 aufgenommenen Druckkörper 13 derart verformt, dass sich die Stirnseiten 15 der Druckkörper 13 ausbauchen. Bei Erreichen eines vorbestimmten Drehmomentes kommen die Anlageflächen 17 der Abstandshalter 16 dann mit Kontaktflächenbereichen der Stirnflächen 5 und 6 der Kupplungselemente 2 und 3 nach und nach in Kontakt, wie es in der Figur 3 dargestellt ist. Wird das Drehmoment ausgehend von diesem Zustand weiter erhöht, beispielsweise auf das Nenn-Drehmoment der Klauenkupplung 1, so drücken die Anlageflächen 17 der einzelnen Druckkörper 13 vollständig gegen Kontaktflächenbereiche der Stirnflächen 5 und 6 der Kupplungselemente 2 und 3, wie es in der Figur 4 gezeigt ist, wobei dank der Wölbung der Stirnflächen 5 und 6 verhindert wird, dass das Ringelement 12 des Druckkörperringes 4 in radialer Einwärtsrichtung verformt wird, da die Abstandshalter 16 an einer Bewegung in radialer Einwärtsrichtung gehindert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere können die Stirnflächen 5 und 6 der Kupplungselemente 2 und 3 anstelle der beschriebenen Wölbung auch eine Neigung aufweisen. Ferner können die Form und Position der Abstandshalter 16 variieren. So kann beispielsweise jeder Druckkörper 13 mit zwei Abstandshaltern 16 versehen sein, die in entgegengesetzte Richtungen von den Druckkörpern 13 vorstehen. Zudem können auch die Anlageflächen 17 der Abstandshalter 16 geneigt oder gewölbt ausgebildet sein, insbesondere korrespondierend zu den Kontaktflächenbereichen der Stirnflächen 5 und 6.

## Patentansprüche

1. Klauenkupplung (1) umfassend zwei einander gegenüber und bezogen auf eine Längsachse (A) fluchtend angeordnete Kupplungselemente (2, 3) mit einander zugewandten Stirnflächen (5, 6), von denen jeweils wechselweise ineinander greifende Klauen (7, 8) vorstehen, die jeweils auf Kreisringen angeordnet sind, und einen zwischen den beiden Kupplungselementen (2, 3) angeordneten, aus elastischem Material hergestellten Druckkörperring (4), der ein Ringelement (12) sowie radial auswärts von dem Ringelement (12) vorstehende Druckkörper (13) aufweist, von denen jeder zwischen zwei benachbart angeordneten Klauen (7, 8) der jeweiligen Kupplungselemente (2, 3) aufgenommen ist, wobei zumindest einige der Druckkörper (13) mit wenigstens einem axial vorstehenden Abstandshalter (16) versehen sind, und wobei jeder Abstandshalter (16) eine Anlagefläche (17) aufweist, die, wenn über die Klauenkupplung (1) ein vorbestimmtes Drehmoment übertragen wird, gegen einen Kontaktflächenbereich einer Stirnfläche (5, 6) eines Kupplungselements (2, 3) gedrückt wird, **dadurch gekennzeichnet, dass** die Kontaktflächenbereiche derart geneigt oder gewölbt ausgebildet sind, dass im unbelasteten Zustand der Klauenkupplung (1) ein axialer Abstand (a) zwischen den Anlageflächen (17) der Abstandshalter (16) und den zugeordneten Kontaktflächenbereichen der Stirnfläche (5, 6) in radialer Auswärtsrichtung (R) zunimmt.

2. Klauenkupplung (1) nach Anspruch 1, **dadurch gekennzeichnet, dass** jedes Kupplungselement (2, 3) vier Klauen (7, 8) und der Druckkörperring (4) acht Druckkörper (13) aufweist.

3. Klauenkupplung (1) nach einem der vorhergehenden Ansprüche, **dadurch gekennzeichnet, dass** jeder Druckkörper (13) mit zumindest einem Abstandshalter (16) versehen ist.

4. Klauenkupplung (1) nach Anspruch 3, **dadurch gekennzeichnet, dass** Abstandshalter (16) benachbarter Druckkörper (13) axial in entgegengesetzten Richtungen vorstehen.

5. Klauenkupplung (1) nach Anspruch 3 oder 4, **dadurch gekennzeichnet, dass** jeder Druckkörper (13) mit zumindest zwei Abstandshaltern (16) versehen ist, die in entgegengesetzten Richtungen vorstehen.

6. Klauenkupplung (1) nach einem der vorhergehenden Ansprüche, **dadurch gekennzeichnet, dass** die Anlageflächen (17) der Abstandshalter (16) geneigt oder gewölbt ausgebildet sind, insbesondere korrespondierend zu den Kontaktflächenbereichen der Stirnflächen (5, 6) der Kupplungselemente (2, 3).

7. Klauenkupplung (1) nach einem der vorhergehenden Ansprüche, **dadurch gekennzeichnet, dass** die Anlageflächen (17) der Abstandshalter (16) in radialer Richtung länglich, insbesondere oval ausgebildet sind.

## Claims

1. Claw coupling (1) comprising two coupling elements (2, 3) opposite one another and disposed aligned in relation to a longitudinal axis (A) with end face surfaces (5, 6) facing towards one another, from which claws (7, 8) engaging into one another, which are each disposed on circular rings, project alternately in each case, and a pressure body ring (4) made of elastic material disposed between the two coupling elements (2, 3), having a ring element (12) as well as pressure bodies (13) projecting radially outwards from the ring element (12), of which each is received between two adjacently disposed claws (7, 8) of the respective coupling elements (2, 3), wherein at least a few of the pressure bodies (13) are provided with at least one axially projecting spacer (16), and wherein each spacer (16) has a contact surface (17) which, when a predefined torque is transmitted via the claw coupling (1), is pressed against a contact surface area of an end face surface (5, 6) of a coupling element (2, 3),
**characterised in that**
the contact surface areas are slanted or curved such that, in the no-load state of the claw coupling (1), an axial distance (a) between the contact surfaces (17) of the spacers (16) and the assigned contact surface areas of the end face surface (5, 6) increases in the radially outwards direction (R).

2. Claw coupling (1) according to claim 1,
**characterised in that**
each coupling element (2, 3) has four claws (7, 8) and the pressure body ring (4) has eight pressure bodies (13).

3. Claw coupling (1) according to one of the preceding claims,
**characterised in that**
each pressure body (13) is provided with at least one spacer (16) .

4. Claw coupling (1) according to claim 3,
**characterised in that**
spacers (16) of adjacently disposed pressure bodies (13) project axially in opposite directions.

5. Claw coupling (1) according to claim 3 or 4,
**characterised in that**
each pressure body (13) is provided with at least two spacers (16), which project in opposite directions.

6. Claw coupling (1) according to one of the preceding claims,
**characterised in that**
the contact surfaces (17) of the spacers (16) are embodied slanted or curved, especially corresponding to the contact surface areas of the end face surfaces (5, 6) of the coupling elements (2, 3).

7. Claw coupling (1) according to one of the preceding claims,
**characterised in that**
the contact surfaces (17) of the spacers (16) are embodied elongated, especially oval, in the radial direction.

## Revendications

1. Embrayage (1) à griffes, comprenant deux éléments (2, 3) d'embrayage opposés l'un à l'autre et alignés par rapport à un axe (A) longitudinale, en ayant des surfaces (5, 6) frontales tournées l'une vers l'autre, de chacune desquelles font saillies des griffes (7, 8) s'interpénétrant tour à tour, qui sont disposées sur des anneaux de cercle, et un anneau (4) de corps de pression, qui est disposé entre les deux éléments (2, 3) d'embrayage, qui est fabriqué en un matériau élastique et qui a un élément (12) annulaire, ainsi que des corps (13) de pression en saillie vers l'extérieur radialement de l'élément (12) annulaire, dont chacun est reçu entre deux griffes (7, 8) voisines des éléments (2, 3) d'embrayage respectifs, dans lequel au moins certains des corps (13) de pression sont pourvus d'au moins une entretoise (16) en saillie axialement et chaque entretoise (16) a une surface (17) de contact, qui, lorsqu'un couple déterminé à l'avance est transmis par l'embrayage à griffes, est poussée sur une partie de surface de contact d'une face (5, 6) avant d'un élément (2, 3) de l'embrayage, **caractérisé**
**en ce que** les parties de surface de contact sont inclinées ou incurvées, de manière à ce que, lorsque l'embrayage (1) à griffes est à l'état non chargé, une distance (a) axiale entre les faces (17) de contact de l'entretoise (16) et les parties de surface de contact associées des faces (5, 6) frontales augmente dans la direction (R) radiale vers l'extérieur.

2. Embrayage (1) à griffes suivant la revendication 1, **caractérisé en ce que** chaque élément (2, 3) de l'embrayage a quatre griffes (7, 8) et l'anneau (4) de corps de pression a huit corps (13) de pression.

3. Embrayage (1) à griffes suivant l'une des revendications précédentes, **caractérisé en ce que** chaque corps (13) de pression est pourvu d'au moins une entretoise (16).

4. Embrayage (1) à griffes suivant la revendication 3, **caractérisé en ce que** des entretoises (16) de corps (13) de pression voisins sont en saillie axialement dans des sens contraires.

5. Embrayage (1) à griffes suivant la revendication 3 ou 4, **caractérisé en ce que** chaque corps (13) de pression est pourvu d'au moins deux entretoises (16) qui font saillie dans des sens contraires.

6. Embrayage (1) à griffes suivant l'une des revendications précédentes, **caractérisé en ce que** les surfaces (17) de contact des entretoises sont inclinées ou incurvées, notamment en correspondance aux parties de surface de contact des faces (5, 6) frontales des éléments (2, 3) de l'embrayage.

7. Embrayage (1) à griffes suivant l'une des revendications précédentes, **caractérisé en ce que** les surfaces (17) de contact des entretoises (16) sont constituées en étant oblongues dans la direction radiale, en étant notamment ovales.
